(19) Europäisches Patentamt
European Patent Office
Office européen des brevets

(11) EP 2 462 071 B1

(12) # FASCICULE DE BREVET EUROPEEN

(45) Date de publication et mention de la délivrance du brevet:
**14.10.2020 Bulletin 2020/42**

(21) Numéro de dépôt: **10762963.6**

(22) Date de dépôt: **02.08.2010**

(51) Int Cl.:
***C04B 24/00*** (2006.01) ***C04B 24/24*** (2006.01)
***C04B 24/26*** (2006.01) ***C04B 28/02*** (2006.01)

(86) Numéro de dépôt international:
**PCT/FR2010/051641**

(87) Numéro de publication internationale:
**WO 2011/015781 (10.02.2011 Gazette 2011/06)**

(54) **MELANGE FLUIDIFIANT POUR COMPOSITION A BASE D'UN LIANT HYDRAULIQUE**

WASSERREDUZIERENDE MISCHUNG FÜR EINE HYDRAULISCHE BINDERZUSAMMENSETZUNG

WATER-REDUCING MIXTURE FOR A HYDRAULIC BINDER COMPOSITION

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **05.08.2009 FR 0903861**

(43) Date de publication de la demande:
**13.06.2012 Bulletin 2012/24**

(73) Titulaire: **Holcim Technology Ltd**
**6300 Zug (CH)**

(72) Inventeurs:
- **RINALDI, David**
  **F-69003 Lyon (FR)**
- **VILLARD, Emmanuel**
  **F-42320 Saint-Christo-en-Jarez (FR)**
- **VENON, Stéphane**
  **F-69150 Decines (FR)**
- **ROCCA, Denis**
  **F-69100 Villeurbanne (FR)**

(74) Mandataire: **Regimbeau**
**20, rue de Chazelles**
**75847 Paris Cedex 17 (FR)**

(56) Documents cités:
**WO-A2-2009/004348 FR-A1- 2 776 285**
**FR-A1- 2 892 420 FR-A1- 2 893 938**
**GB-A- 2 442 073**

- **HOUST, Y.F., BOWEN, P. & PERCHE, F.: "Towards Tailored Superplasticizers" In: DHIR, R., HEWLETT, P. & NEWLANDS, M.D.: "Admixtures - Enhancing Concrete Performance", 28 juillet 2005 (2005-07-28), Thomas Telford LTD, XP002572430, ISBN: 9780727734075 pages 1-10, page 3 - page 4; tableau 1**
- **CHRYSO SAS: "Port 2000 Le Havre", , 30 avril 2005 (2005-04-30), XP002572431, Extrait de l'Internet: URL:http://chryso-swc.com/upload/t_documents/Fichier_L2/45894/LeHavre-Harbour_Phase1_GB_BD.pdf [extrait le 2010-03-10]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 462 071 B1

## Description

La présente invention a pour objet des compositions à base de liant hydraulique utilisées pour la fabrication de pièces et ouvrages en béton. Plus particulièrement, la présente invention concerne des compositions à base de liant hydraulique dans lesquelles au moins un agent réducteur d'eau est mélangé. Il s'agit, par exemple, d'un béton qui comprend un liant hydraulique mélangé à des granulats fins, par exemple du sable, et éventuellement à des granulats grossiers, par exemple de la pierre broyée.

Lorsque les composants du béton sont gâchés avec de l'eau, on obtient une composition qui fait prise et durcit par suite de réactions et de processus d'hydratation, et qui après durcissement, conserve sa résistance et sa stabilité même sous l'eau. Avant la prise, le béton est manipulable pendant une durée limitée, appelée généralement fenêtre d'ouvrabilité. La fenêtre d'ouvrabilité peut être définie comme étant la durée pendant laquelle l'étalement ou l'affaissement de la composition cimentaire est supérieur à une valeur donnée.

Une difficulté à prendre en compte lors de la réalisation d'un béton correspond à la quantité d'eau de gâchée à utiliser. En effet, la quantité d'eau de gâchée doit être suffisante pour pouvoir manipuler convenablement le béton. Toutefois, une augmentation de la quantité d'eau de gâchée tend à réduire la résistance en compression du béton obtenue après durcissement.

Pour obtenir un béton ayant une fluidité satisfaisante pendant la fenêtre d'ouvrabilité sans utiliser une quantité excessive d'eau, le béton peut comprendre un ou plusieurs additifs appelés fluidifiants ou réducteurs d'eau.

Des exemples de réducteurs d'eau correspondent aux composés décrits dans le brevet EP 0 663 892 au nom de Chryso. Il s'agit de composées comprenant une chaîne polyoxyalkylée et un groupement amino-alkylène phosphonique. Bien que ces additifs permettent efficacement de diminuer la viscosité d'un béton, le dosage de ces additifs dans le béton peut être important pour obtenir les effets souhaités. Ceci peut s'avérer être un inconvénient dans la mesure où le coût de revient de ces additifs est élevé. En outre, ces additifs peuvent entraîner un retard de prise qui augmente avec le dosage de l'additif.

La demande de brevet FR 2 776 285 décrit des compositions hydrauliques comprenant un réducteur d'eau Optima 100 et un polycarboxylate de polyoxyde d'alkylène acrylique avec des temps de prise de plus de 12h.

Le but de la présente invention est de proposer une composition à base de liant hydraulique qui a une fenêtre d'ouvrabilité d'au moins 90 minutes, qui a une viscosité réduite sur la fenêtre d'ouvrabilité et qui n'a pas un temps de prise trop élevé.

Pour ce faire, la présente invention prévoit une composition hydraulique comprenant :

- au moins un liant hydraulique ;
- au moins un premier additif réducteur d'eau comprenant au moins un groupement amino-alkylène phosphonique ;
- au moins un second additif réducteur d'eau comprenant au moins un polymère à structure peigne, un polycarboxylate de polyoxyde d'alkylène méthacrylique, la concentration en poids d'extrait sec du second additif étant comprise de 30 % à 95 % de la concentration en poids d'extrait sec du premier additif.

De façon avantageuse, le dosage du premier additif dans la composition selon la présente invention est inférieur au dosage qui devrait être utilisé pour obtenir un même étalement ou affaissement initial si le premier additif était utilisé seul. Le coût de fabrication de la composition hydraulique est ainsi réduit. La présente invention permet d'obtenir simultanément :

- un affaissement similaire à celui qui serait obtenu dans le cas où seul le premier additif aurait été utilisé ;
- un dosage du mélange fluidifiant dans la composition hydraulique nettement inférieure (notamment de plus de 50 %) à ce qui serait obtenu dans le cas où seul le premier additif aurait été utilisé ;
- un retard de prise nettement inférieur (notamment de plus de 50 %) au retard de prise qui serait obtenu dans le cas où seul le premier additif aurait été utilisé ; et
- une viscosité nettement inférieure (notamment de plus de 15 %) à celle qui serait obtenue dans le cas où seul le second additif aurait été utilisé.

Par l'expression « liant hydraulique », on entend selon la présente invention un matériau pulvérulent qui, gâché avec de l'eau, forme une pâte qui fait prise et durcit par suite de réactions et de processus d'hydratation, et qui après durcissement, conserve sa résistance et sa stabilité même sous l'eau. Par l'expression « composition hydraulique », on entend toute composition comprenant un liant hydraulique. Il s'agit, par exemple, d'un béton.

Par le terme « béton », on entend un mélange de liant hydraulique, de granulats, d'eau, éventuellement d'additifs, et éventuellement d'additions minérales comme par exemple le béton hautes performances, le béton très hautes performances, le béton autoplaçant, le béton autonivelant, le béton autocompactant, le béton fibré, le béton prêt à l'emploi ou le béton coloré. Par le terme « béton », on entend également les bétons ayant subi une opération de finition

telle que le béton bouchardé, le béton désactivé ou lavé, ou le béton poli. On entend également selon cette définition le béton précontraint. Le terme « béton » comprend les mortiers, dans ce cas précis le béton comprend un mélange de liant hydraulique, de sable, d'eau et éventuellement d'additifs et éventuellement d'additions minérales. Le terme « béton » selon l'invention désigne indistinctement le béton frais ou le béton durci.

Selon l'invention le terme « granulats » désigne des graviers, des gravillons et/ou du sable.

Selon l'invention, l'expression « additions minérales » désigne un matériau minéral finement divisé utilisé dans le béton afin d'améliorer certaines propriétés ou pour lui conférer des propriétés particulières. Il s'agit, par exemple, des cendres volantes (telles que définies dans la norme EN 450), des fumées de silice (telles que définies dans la norme prEN 13263 :1998 ou NF P 18-502), des laitiers (tels que définis dans la norme NF P 18-506), des additions calcaires (telles que définies dans la norme NF P 18-508) et des additions siliceuses (telles que définies dans la norme NF P 18-509).

Par le terme « prise », on entend selon la présente invention le passage à l'état solide par réaction chimique d'hydratation du liant. La prise est généralement suivie par la période de durcissement.

Par le terme « durcissement », on entend selon la présente invention l'acquisition des propriétés mécaniques d'un liant hydraulique, après la fin de la prise.

Par l'expression « réducteur d'eau », on entend un additif qui sert à diminuer la quantité d'eau nécessaire à la réalisation d'un béton d'au moins 5 %. A titre d'exemple, les réducteurs d'eau à base d'acides lignosulfoniques, d'oxacides carboxyliques ou d'hydrates de carbone traités peuvent réduire d'environ 10 % à 15 % les besoins en eau pour la réalisation d'un béton.

Par l'expression « superplastifiant » ou « superfluidifiant » ou « super réducteur d'eau », on entend un réducteur d'eau qui permet de réduire de plus de 12 %, la quantité d'eau nécessaire à la réalisation d'un béton. Les superplastifiants ont été de façon générale classés en quatre groupes : condensat de naphtalène formaldéhyde sulfoné (ou SNF, acronyme anglais pour sulphonated naphthalene formaldehyde) ; condensat de mélamine formaldéhyde sulfoné (ou SMF, acronyme anglais pour sulphonated melamine formaldehyde) ; des lignosulfonates modifiés (ou MLS, acronyme anglais pour modified lignosulfonates) ; et autres. Des superplastifiants plus récents comprennent des composés dispersants de type polymère polycarboxylate (« PC »). Certains des superplastifiants PC peuvent avoir une structure peigne comprenant au moins une chaîne principale et des greffons pendants. On désigne de tels superplastifiants par l'acronyme général PCP. Par exemple, ces superplastifiants portent des fonctions ioniques de type carboxylique et/ou sulfonique et/ou phosphonique, de préférence carboxylique au niveau de la chaîne principale et des chaînons pendants de type polyéthylène glycol, polypropylène glycol, copolymère ou autre chaînon de préférence hydrosoluble.

Par l'expression « polycarboxylate de polyoxyde d'alkylène », on entend désigner des copolymères en peigne à chaîne principale polycarboxylate portant des chaînes latérales greffées de polyoxyde d'alkylène.

Par l'expression « taux d'ester » d'un polymère, on entend la proportion des unités monomère de la chaîne principale portant une fonction ester définie par la formule ci-dessous :

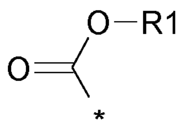

où R1 désigne un groupement comportant au moins un atome de carbone par lequel il est lié à l'atome d'oxygène de la fonction ester et * symbolise la chaîne principale. R1 peut notamment être un groupement alkyle ou un greffon de polyoxyde d'alkylène. Le taux d'ester est exprimé en pourcentage molaire et il est calculé en divisant le nombre de fonctions ester sur la chaîne principale par le nombre total d'unités monomère sur la chaîne principale.

A titre d'exemple, le liant hydraulique peut être un ciment Portland. Il peut s'agir d'un ciment de type CEM I, CEM II, CEM III, CEM IV ou CEM V selon la norme « Ciment » NF EN 197-1.

Le second additif est un réducteur d'eau qui permet de réduire de plus de 12 % la quantité d'eau nécessaire à la réalisation d'un béton. Selon un exemple de réalisation, le second additif est un réducteur d'eau de type polymère polycarboxylate ou PC. A titre d'exemple, le second additif est obtenu par exemple, par copolymérisation de monomères de (méth)acrylate de polyoxyde d'alkylène et de monomères d'acide carboxylique, et optionnellement d'autres monomères qui sont copolymérisés avec ces monomères.

Le second additif peut correspondre à un PCP et avoir une structure peigne comprenant au moins une chaîne principale et des greffons pendants. Le second additif peut être un polymère du type polycarboxylate de polyoxyde d'alkylène. Selon un exemple de réalisation de la présente invention, le second additif correspond à l'additif CHRYSO Fluid Optima 206 commercialisé par la société Chryso. Selon un autre exemple de réalisation de la présente invention, le second additif est un polymère du type polycarboxylate de polyoxyde d'alkylène méthacrylique.

Un exemple de procédé de fabrication d'un polymère méthacrylique du type polycarboxylate de polyoxyde d'alkylène méthacrylique, pouvant être utilisé comme second additif, va maintenant être décrit.

Dans un ballon tricol de 500 ml, sont introduits successivement :

- 86,8 g de méthylméthacrylate de polyéthylène glycol (MMPEG) ayant un poids moléculaire de 1100 daltons ;
- 13,1 g d'acide méthacrylique ; et
- 150 g de tétrahydrofurane (THF).

Le ballon est équipé d'une sonde de température, d'une canule d'azote pour effectuer un bullage de la solution contenue dans le ballon et d'un système réfrigérant pour condenser les éventuelles vapeurs émises.
Après avoir démarré la circulation d'eau dans le circuit de réfrigération et le bullage de l'azote, l'agitation est mise en route ainsi que la chauffe du milieu réactionnel à une température de consigne de 60°C. Une fois la température de consigne atteinte et le dégazage suffisant du milieu réactionnel (20 minutes environ), 0,42 g d'acide thioglycolique sont ajoutés dans le ballon. Deux minutes après, 0,59 g de Vazo™ 52 sont ajoutés (thermoamorceur commercialisé par la société DuPont). Cette opération est prise comme temps de référence. Le milieu réactionnel est maintenu en température pendant 6 heures. La chauffe est ensuite arrêtée et le milieu est laissé à refroidir. Une fois à température ambiante, de l'eau est ajoutée au milieu et le THF est évacué par évaporation rotative. On récupère ainsi une solution aqueuse de polymère pouvant être utilisée comme second additif selon un exemple de réalisation de la présente invention.
Selon un exemple de réalisation, le premier additif correspond à l'additif CHRYSO Fluid Optima 100 commercialisé par la société Chryso.
Selon un exemple de réalisation, le premier additif répond à la formule (1) suivante :

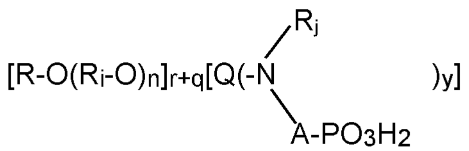 (1)

dans laquelle :

- R est un atome d'hydrogène ou un groupe hydrocarboné monovalent comportant de 1 à 18 inclus atomes de carbone et éventuellement un ou plusieurs hétéroatomes ;
- les $R_i$ sont semblables ou différents entre eux et représentent un alkylène comme l'éthylène, le propylène, l'amylène, l'octylène ou le cyclohexène ou un arylène comme le styrène ou le méthylstyrène, les $R_i$ renfermant éventuellement un ou plusieurs hétéroatomes ;
- Q est un groupe hydrocarboné comportant de 2 à 18 inclus atomes de carbone et éventuellement un ou plusieurs hétéroatomes ;
- A est un groupe alkylidène comportant de 1 à 5 inclus atomes de carbone ;
- les $R_j$ sont semblables ou différents entre eux et peuvent être choisis parmi :

  *le groupe $A\text{-}PO_3H_2$, A ayant la signification précitée ;
  *un groupe alkyle comportant de 1 à 18 inclus atomes de carbone et pouvant porter des groupements $[R\text{-}O(R_i\text{-}O)_n]$, R et $R_i$ ayant les significations précitées ;
  *et le groupement :

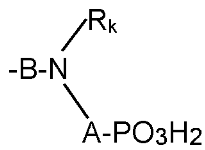

  - $R_k$ désignant un groupement tel que $R_j$ ;
  - B désignant un groupement alkylène comportant de 2 à 18 inclus atomes de carbone ;

- "n" est un nombre supérieur ou égal à 0 ;
- "r" est la somme des groupements $[R\text{-}O(R_i\text{-}O)_n]$ portés par l'ensemble des $R_j$ ;
- "q" est le nombre des groupements $[R\text{-}O(R_i\text{-}O)_n]$ portés par Q ;
- la somme "r+q" est comprise de 1 à 10 ;
- "y" est un nombre entier compris de 1 à 3 ;
- Q, N et les $R_j$ peuvent former ensemble un ou plusieurs cycles, ce ou ces cycles pouvant en outre contenir un ou plusieurs autres hétéroatomes.

Les composés ou les sels des composés selon la formule (1) peuvent être utilisés. Les sels des composés selon la formule (1) peuvent être stœchiométriques ou non, mixtes ou non, et sont constitués avec des métaux alcalins, des métaux alcalinoterreux, des amines ou des ammoniums quaternaires.

Un exemple de procédé de préparation des composés de la formule (1) est décrit dans le brevet EP 0 663 892.

Selon l'invention, on utilise de préférence les composés selon la formule (1) pour lesquels R est un atome d'hydrogène ou un groupe méthyle, éthyle ou nonylphénol. De préférence encore, R est un atome d'hydrogène.

Les groupes $R_i$ sont de manière préférentielle choisis parmi l'éthylène et le propylène. Il est encore plus souhaitable que les groupes $R_i$ soient majoritairement, voire uniquement, de l'éthylène, et en nombre suffisant pour conserver le caractère hydrosoluble ou hydrodispersable des composés selon la formule (1).

Le groupe Q comporte, de préférence, de 2 à 12 atomes de carbone, et de préférence encore, il comporte de 2 à 6 atomes de carbone. Avantageusement, Q est choisi parmi l'éthylène, le cyclo-hexène ou le n-hexène.

Le groupe alkylidène A qui est porteur d'un atome de carbone divalent comporte de préférence de 1 à 3 atomes de carbone. Il est particulièrement avantageux que A soit le groupe méthylène.

Le groupe $R_j$, qui est éventuellement salifié, est choisi de préférence parmi les groupes $-CH_2-PO_3H_2$, méthyle et $C_2H_4N(CH_2PO_3H_2)_2$. De préférence encore $R_j$ représente le groupe $-CH_2-PO_3H_2$.

Il est souhaitable que "n" soit compris entre 1 et 10 000. On préfère en particulier les valeurs de "n" comprises entre 1 et 500. Dans l'idéal, on choisit pour "n" une valeur comprise entre 1 et 250.

La somme "r + q" correspond au nombre total de chaînes polyoxyalkylées. De préférence, cette somme est inférieure à 3. De préférence encore, elle est égale à 1.

Lorsqu'ils sont à l'état de sel, les composés selon la formule (1) sont de préférence des sels de sodium, de calcium ou de diéthanolamine.

Les procédés de fabrication de deux exemples plus précis d'un premier additif répondant à la formule générale (1) vont maintenant être décrits.

Le premier exemple de premier additif répond à la formule (2) suivante :

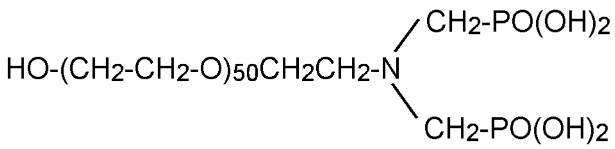

(2)

Le premier exemple de premier additif est réalisé à partir d'un composé classique intermédiaire répondant à la formule (3) suivante :

$$HO - (CH_2CH_2O)_{50}- CH_2CH_2- NH_2 \qquad (3)$$

Dans un tricol d'un litre équipé d'un réfrigérant, on introduit 226 g du composé selon la formule (3), 16,4 g d'acide phosphoreux cristallisé et 12 g d'acide chlorhydrique en solution aqueuse à 35%.

Le mélange est chauffé sous agitation jusqu'à 10°C, puis on introduit en cinq heures, 17,8 g d'une solution aqueuse de formaldéhyde à 37 %, et on chauffe à reflux pendant dix-sept heures.

Le milieu réactionnel est ensuite versé dans 900 $cm^3$ d'eau froide, et la teneur en matière sèche est ajustée à 30 % par dilution.

Selon un exemple de réalisation, le premier additif répond à la formule (4) suivante :

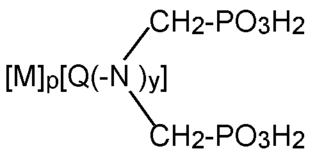

(4)

dans laquelle :

- M est un groupe hydrocarboné, linéaire ou ramifié (éventuellement en dendrimère) comprenant éventuellement un ou plusieurs hétéroatomes (O, N, S) ; éventuellement de natures différentes ;
- Q est un groupe hydrocarboné comportant de 2 à 18 inclus atomes de carbone et éventuellement un ou plusieurs hétéroatomes ;
- "p" est le nombre des groupements [M] portés par Q, p étant compris de 1 à 10 ; et
- "y" est un nombre entier compris de 1 à 3.

Les p groupes M peuvent être identiques ou différents. De préférence, le groupe M ne comprend pas de groupe phosphate. Chaque groupe M peut avoir une masse molaire supérieure à 1000 g/mol. La masse molaire de l'ensemble des groupes M d'une même molécule est de préférence comprise de 2000 à 10000 g/mol.

De préférence, le nombre p est inférieur au double du nombre y.

Des exemples de réalisation vont maintenant être décrits en relation avec les figures parmi lesquelles :

la figure 1 représente les évolutions théorique et réelle du dosage d'un mélange fluidifiant dans une composition hydraulique en fonction du pourcentage du second additif dans le mélange fluidifiant pour obtenir un étalement initial donné ; et

la figure 2 représente les évolutions de la viscosité et du temps de prise de la composition hydraulique correspondant à la figure 1 en fonction du pourcentage du second additif dans le mélange fluidifiant.

Méthode de mesure de l'étalement d'une composition hydraulique

Le principe de la mesure d'étalement consiste à remplir un tronc de cône de mesure d'étalement avec la composition hydraulique à tester puis à libérer ladite composition dudit tronc de cône de mesure d'étalement afin de déterminer la surface du disque obtenu quand la composition hydraulique a fini de s'étaler. Le tronc de cône de mesure d'étalement correspond à une reproduction à l'échelle ½ du cône tel que défini par la norme NF P 18-451, 1981. Le tronc de cône de mesure d'étalement a les dimensions suivantes :

- diamètre de la base supérieure : 50 +/- 0,5 mm ;
- diamètre de la base inférieure : 100 +/- 0,5 mm ; et
- hauteur : 150 +/-0,5 mm.

L'ensemble de l'opération est réalisée à 20 °C. La mesure de l'étalement est réalisée de la façon suivante :

- Remplir le tronc de cône de référence en une seule fois avec la composition hydraulique à tester ;
- Piquer si besoin pour répartir la composition hydraulique de manière homogène dans le tronc de cône ;
- Araser la surface supérieure du cône ;
- Soulever le tronc de cône verticalement ; et
- Mesurer l'étalement selon quatre diamètres à 45° avec un pied à coulisse. Le résultat de la mesure d'étalement est la moyenne des quatre valeurs à +/- 1 mm.

Méthode de mesure de la viscosité d'une composition hydraulique

La mesure de la viscosité consiste à mesurer le temps d'écoulement de la composition hydraulique à tester au travers d'un tronc de cône de mesure de viscosité. Le tronc de cône de mesure de viscosité a les dimensions suivantes :

- diamètre de la base de plus grand diamètre : 150 mm ; et
- diamètre de la base de plus petit diamètre : 17 mm.

Le tronc de cône de mesure de viscosité comprend en outre des premier et second repères qui peuvent être des marques parallèles prévues sur la parois du tronc de cône et définissant des plans perpendiculaires à l'axe du tronc de cône. La première marque est plus proche de la base de plus grand diamètre que la seconde marque. La distance entre les deux repères est de 60 mm, le premier repère se trouvant à 12 mm de la base de plus grand diamètre.

L'ensemble de l'opération est réalisée à 20 °C. La mesure de la viscosité d'une composition hydraulique est réalisée de la façon suivante :

- Orienter l'axe du tronc de cône selon la verticale, la base de plus petit diamètre étant orientée vers le bas et étant obturée par un bouchon ;
- Remplir le tronc de cône avec la composition hydraulique jusqu'au dessous du premier repère ;
- Piquer la composition hydraulique avec une spatule afin de s'assurer de l'absence de grosses bulles d'air ;
- Retirer le bouchon ;
- Déclencher le chronomètre lorsque le niveau de la composition hydraulique passe devant le premier repère ;
- Arrêter le chronomètre lorsque le niveau de la composition hydraulique passe devant le second repère ; et
- Noter la durée chronométrée qui est représentative de la viscosité de la composition hydraulique.

Méthode de mesure des temps de début et de fin de prise d'un mortier

Cette méthode est basée sur la méthode de mesure normalisée de détermination du temps de prise et de la stabilité selon la norme EN 196-3. Elle utilise un prisomètre VICAT automatique tel que décrit dans la norme EN 196-3, un moule tronconique et un récipient. Le prisomètre VICAT comprend une aiguille, une platine et un mécanisme de déplacement de l'aiguille par rapport à la platine selon l'axe vertical. L'aiguille peut avoir la forme d'un cylindre droit ayant une longueur supérieure à 45 mm et un diamètre d'environ 1,13 mm. L'axe de l'aiguille est vertical. Le récipient a des dimensions supérieures au moule et est disposé sur la platine. Le moule a une forme tronconique. Le moule est disposé dans le récipient, l'axe du moule coïncidant avec l'axe de rotation de la platine.

L'ensemble de l'opération est réalisée à 20 °C. La méthode de mesure des temps de début et de fin de prise du mortier est la suivante :

- Huiler au pinceau avec de l'huile de démoulage le moule tronconique ;
- Introduire ce moule dans le récipient ;
- Remplir le moule avec le mortier ;
- Araser la surface du moule avec une réglette pour obtenir une surface plane ;
- Mettre en place l'ensemble moule + récipient sur la platine ;
- Ajouter sur le support d'aiguille la masse supplémentaire de 700 g ;
- Déplacer l'aiguille dans le mortier, le temps entre chaque descente de l'aiguille étant de 10 minutes, le mouvement de l'aiguille correspondant à une chute libre depuis la surface libre du mortier. Cette opération est répétée 90 fois.

Le temps de début de prise correspond de la durée au bout de laquelle l'aiguille ne descend plus qu'à 4 mm ± 1 mm du fond du moule. La durée est mesurée à partir de l'instant T0 de la méthode de préparation du mortier décrite ci-après. Le temps de fin de prise correspond à la durée au bout de laquelle l'aiguille ne descend plus que de 0,5 mm dans le mortier. La durée est mesurée à partir de l'instant T0 de la méthode de préparation du mortier décrite ci-après.

Méthode de préparation du mortier

Le mortier est réalisé au moyen d'un malaxeur de type Perrier. L'ensemble de l'opération est réalisée à 20 °C. La méthode de préparation comprend les étapes suivantes :

- Mettre les sables dans un bol de malaxeur ;
- A T = 0 seconde : débuter le malaxage à petite vitesse (140 tours/min) et ajouter simultanément l'eau de mouillage en 30 secondes, puis continuer à malaxer à petite vitesse (140 tours/min) jusqu'à 60 secondes ;
- A T = 1 minute : arrêter le malaxage et laisser reposer pendant 4 minutes ;
- A T = 5 minutes (T0 pour la méthode de mesure du temps de prise) : ajouter le liant hydraulique ;
- A T = 6 minutes malaxer à petite vitesse (140 tours/min) pendant 1 minute ;
- A T = 7 minutes : ajouter l'eau de gâchage (+ premier et second additifs) en 30 secondes (tout en malaxant à petite vitesse (140 tours/min)) ; et
- A T = 7 minutes et 30 secondes : malaxer à grande vitesse (280 tours/min) pendant 2 minutes.

Formulations de mortiers

Deux formulations de mortier sont utilisées pour réaliser les essais.

**Tableau 1 : Formulation 1 de mortier**

| Composant | Masse (g) |
|---|---|
| Ciment | 480,4 |
| Sable ISO | 1350 |
| Sable siliceux | 200,1 |

(suite)

| Composant | Masse (g) |
|---|---|
| Filler calcaire | 354,1 |
| Eau totale<br>- dont eau de gâchée<br>- dont eau de mouillage des sables | 326,7<br>226,7<br>100 |
| Rapport Eau/Ciment | 0,68 |

**Tableau 2 : Formulation 2 de mortier**

| Composant | Masse (g) |
|---|---|
| Ciment | 480,4 |
| Sable ISO | 1350 |
| Sablon | 200,1 |
| Filler calcaire | 340,8 |
| Eau totale<br>- dont eau de gâchée<br>- dont eau de mouillage des sables | 297,8<br>197,8<br>100 |
| Rapport Eau/Ciment | 0,62 |

Le ciment est un ciment Portland de type CEM I 52,5 N produit à la cimenterie Lafarge de Saint-Pierre-La-Cour.

Le sable ISO est un sable certifié CEN EN 196-1 (Fournisseur: Société Nouvelle de Littoral). Il s'agit d'un sable naturel siliceux, à grains arrondis, d'une teneur en silice au moins égale à 98 %. Sa composition granulométrique se situe dans les limites indiquées au Tableau 3.

**Tableau 3 - Composition granulométrique du sable ISO**

| **Dimensions des mailles carrées** (mm) | **Refus cumulés sur les tamis** (%) |
|---|---|
| 2,00 | 0 |
| 1,60 | 7 ± 5 |
| 1,00 | 33 ± 5 |
| 0,50 | 67 ± 5 |
| 0,16 | 87 ± 5 |
| 0,08 | 99 ± 1 |

Le filler calcaire est le Filler Erbray (Fournisseur : MEAC). Le sable siliceux est le Fulchiron PE2 LS (Fournisseur : Fulchiron).

Dans les exemples suivants, on compare certaines propriétés d'un mortier réalisé selon la formulation 1 ou 2, et comprenant un mélange de premier et second additifs pour différents dosages des premier et second additifs. Dans les exemples qui suivent, le premier additif est appelé Add 1 et correspond au CHRYSO Fluid Optima 100 (fournisseur : Chryso). Le CHRYSO Fluid Optima 100 est un additif de la famille des diphosphonates et dont la formule est similaire à la formule (2). Le second additif est appelé Add 2 et correspond à un polymère du type polycarboxylate de polyoxyde d'alkylène. Les concentrations ou dosages des premier et second additifs sont exprimés en poids par rapport au poids du ciment. Pour chaque mortier, on mesure selon les méthodes de mesures décrites précédemment :

- le temps de début de prise ;
- l'étalement du mortier à des instants successifs ; et
- la viscosité du mortier à des instants successifs.

Exemple 1

Un mortier correspondant à la formulation 2 est réalisé. L'additif Add 2 est le CHRYSO Fluid Optima 206 (fournisseur: Chryso). Trois exemples de concentrations des additifs Add 1 et Add 2 sont testées. Les résultats obtenus sont regroupés dans le tableau 4 ci-après :

**Tableau 4**

| Optima 100/ Optima 206 (%) | Dosage | | | Rhéologie (mm) à 5 min | Viscosité (s) à 5 min | Début temps de prise |
|---|---|---|---|---|---|---|
| | Dosage total | Dosage Add 1 | Dosage Add 2 | | | |
| 100/0 | 0,9 % | 0,9 % | 0,0 % | 305 | 14 | > 12 h |
| 50/50 | 0,34 % | 0,17 % | 0,17 % | 345 | 24 | 5 h 45 min |
| 0/100 | 0,32 % | 0,00% | 0,32 % | 315 | 35 | 4 h 50 min |

En appelant dosage_Add_1 le dosage de l'additif Add 1 seul correspondant à un étalement initial donné et dosage_Add_2 le dosage de l'additif Add 2 seul correspondant au même étalement initial, le dosage théorique dosage_mélange du mélange correspondant au même étalement initial et comprenant un pourcentage w%Add_1 en poids de l'additif Add 1 et un pourcentage w%Add_2 en poids de l'additif Add 2 peut être donné par la loi des mélanges selon la relation suivante :

$$\frac{1}{\text{dosage_mélange}} = \frac{\text{w\%Add_1}}{\text{dosage_Add_1}} + \frac{\text{w\%Add_2}}{\text{dosage_Add_2}}$$

Dans le présent exemple, le dosage théorique du mélange fluidifiant comprenant 50 % en poids de l'additif Add 1 et 50 % en poids de l'additif Add 2 serait de 0,49 % en poids par rapport au poids du ciment pour obtenir un étalement initial de l'ordre de 320 mm. Le dosage réel obtenu est de 0,34 % en poids par rapport au poids du ciment. La Demanderesse a donc mis en évidence que, de façon surprenante, le dosage réel d'un mélange comprenant 50 % en poids de l'additif Add 1 et 50 % en poids de l'additif Add 2 pour obtenir un étalement initial donné est inférieur au dosage théorique attendu. De plus, la viscosité initiale (à 5 minutes) du mortier comprenant les additifs Add 1 et Add 2 est, de façon avantageuse, plus faible que la viscosité initiale du mortier ne comprenant que l'additif Add 2. De plus, le temps de début de prise du mortier comprenant les additifs Add 1 et Add 2 est, de façon avantageuse, nettement plus faible que le temps de début de prise du mortier ne comprenant que l'additif Add 1 et seulement légèrement supérieur au temps de prise du mortier ne comprenant que l'additif Add 2.

Exemple 2

Un mortier correspondant à la formulation 1 est réalisé. L'additif Add 2 est le CHRYSO Fluid Optima 206 (fournisseur: Chryso). Trois exemples de concentrations des additifs Add 1 et Add 2 sont testés. Les résultats obtenus sont regroupés dans le tableau 5 ci-après :

**Tableau 5**

| Optima 100/ Optima 206 (%) | Dosage | | | Rhéologie (mm) à 5 min | Viscosité (s) à 5 min | Début temps de prise |
|---|---|---|---|---|---|---|
| | Dosage total | Dosage Add 1 | Dosage Add 2 | | | |
| 100/0 | 0,75 % | 0,75 % | 0,00 % | 320 | 8 | > 15 h |
| 50/50 | 0,24 % | 0,12 % | 0,12 % | 330 | 13 | 5 h 45 min |
| 0/100 | 0,24 % | 0,0 % | 0,24 % | 340 | 18 | 5 h 30 min |

Dans le présent exemple, le dosage théorique du mélange fluidifiant comprenant 50 % en poids de l'additif Add 1 et 50 % en poids de l'additif Add 2 serait de 0,36 % en poids par rapport au poids du ciment pour obtenir un étalement initial de l'ordre de 330 mm. Le dosage réel obtenu est de 0,24 % en poids par rapport au poids du ciment.

La Demanderesse a donc mis en évidence que, de façon surprenante, le dosage réel d'un mélange comprenant 50 % en poids de l'additif Add_1 et 50 % en poids de l'additif Add_2 pour obtenir un étalement initial donné est inférieur au dosage théorique attendu. De plus, la viscosité initiale (à 5 minutes) du mortier comprenant les additifs Add 1 et Add 2 est, de façon avantageuse, plus faible que la viscosité initiale du mortier ne comprenant que l'additif Add 2. De plus, le temps de début prise du mortier comprenant les additifs Add 1 et Add 2 est, de façon avantageuse, nettement plus faible que le temps de début de prise du mortier ne comprenant que l'additif Add 1 et est du même ordre que le temps de début de prise du mortier ne comprenant que l'additif Add 2.

Exemple 3

Un mortier correspondant à la formulation 1 est réalisé. L'additif Add 2 est le PCP méthacrylique. Six exemples de concentrations des additifs Add 1 et Add 2 sont testés. Les résultats obtenus sont regroupés dans le tableau 6 ci-après et illustrés sur les figures 1 et 2 :

**Tableau 6**

| Optima 100/ PCP (%) | Dosage | | | Rhéologie (mm) à 5 min | Viscosité (s) à 5 min | Début temps de prise |
|---|---|---|---|---|---|---|
| | Dosage total | Dosage Add 1 | Dosage Add 2 | | | |
| 100/0 | 0,75 % | 0,75 % | 0,00 % | 320 | 8 | > 15 h |
| 80/20 | 0,30 % | 0,24 % | 0,06 % | 340 | 11 | 6 h 45 min |
| 50/50 | 0,24 % | 0,12 % | 0,12 % | 345 | 14 | 5 h 55 min |
| 30/70 | 0,24 % | 0,05 % | 0,19 % | 335 | 16 | 6 h 00 min |
| 10/90 | 0,24 % | 0,03 % | 0,21 % | 335 | 16 | 5 h 46 min |
| 0/100 | 0,24 % | 0,00 % | 0,24 % | 340 | 15 | 5 h 50 min |

En figure 1, la courbe C1 représente l'évolution théorique du dosage du mélange fluidifiant dans le mortier en fonction du pourcentage du second additif dans le mélange fluidifiant pour obtenir un étalement initial donné d'environ 330 mm. La courbe C1 est obtenue à partir de la loi de mélange décrite précédemment. Dans le présent exemple, de façon surprenante, le dosage réel du mélange fluidifiant est inférieur au dosage théorique de la composition pour obtenir un étalement initial de l'ordre de 330 mm. En outre, au moins jusqu'à un pourcentage du premier additif inférieur à 75 % en poids dans le mélange fluidifiant, le dosage du mélange fluidifiant n'augmente que très faiblement par rapport au dosage du mélange fluidifiant comprenant 100 % en poids du second additif. De plus, pour une composition dispersante comprenant au moins 50 % en poids de l'additif Add 1, la viscosité du mortier comprenant les additifs Add 1 et Add 2 est, de façon avantageuse, proche de la viscosité du mortier ne comprenant que l'additif Add 1 et est plus faible que la viscosité initiale du mortier ne comprenant que l'additif Add 2. En outre, le temps de début de prise du mortier comprenant les additifs Add 1 et Add 2 est, de façon avantageuse, nettement plus faible que le temps de début de prise du mortier ne comprenant que l'additif Add 1 et est seulement supérieure d'environ une heure (pour une composition dispersante comprenant 80 % en poids de l'additif Add 1) par rapport au temps de début de prise du mortier ne comprenant que l'additif Add 2.

De ce fait, lorsque la concentration en poids d'extrait sec du second additif est comprise de 25 % à 100 % de la concentration en poids d'extrait sec du premier additif, on obtient simultanément :

- un affaissement similaire à celui qui serait obtenu dans le cas où seul le premier additif aurait été utilisé ;
- un dosage du mélange fluidifiant dans la composition hydraulique inférieure de plus de 50 % à ce qui serait obtenu dans le cas où seul le premier additif aurait été utilisé ;
- un retard de prise inférieur de plus de 50 % au retard de prise qui serait obtenu dans le cas où seul le premier additif aurait été utilisé ; et
- une viscosité inférieure de plus de 15 % à celle qui serait obtenue dans le cas où seul le second additif aurait été utilisé.

## Revendications

**1.** Composition hydraulique comprenant :

- au moins un liant hydraulique ;
- au moins un premier additif réducteur d'eau comprenant au moins un groupement amino-alkylène phosphonique ;
- au moins un second additif réducteur d'eau comprenant au moins un polymère à structure peigne, un polycarboxylate de polyoxyde d'alkylène méthacrylique, la concentration en poids d'extrait sec du second additif étant comprise de 30 % à 95 % de la concentration en poids d'extrait sec du premier additif.

**2.** Composition hydraulique selon la revendication 1, dans laquelle la concentration en poids d'extrait sec du second additif est inférieure ou égale à 90 % de la concentration en poids d'extrait sec du premier additif.

**3.** Composition hydraulique selon l'une quelconque des revendications précédentes, dans laquelle le premier additif répond à la formule :

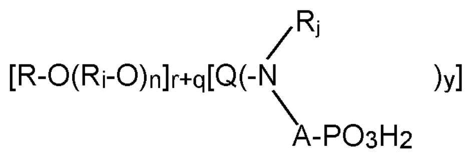

dans laquelle :

- R est un atome d'hydrogène ou un groupe hydrocarboné monovalent comportant de 1 à 18 inclus atomes de carbone et éventuellement un ou plusieurs hétéroatomes ;
- les $R_i$ sont semblables ou différents entre eux et représentent un alkylène comme l'éthylène, le propylène, l'amylène, l'octylène ou le cyclohexène ou un arylène comme le styrène ou le méthylstyrène, les $R_i$ renfermant éventuellement un ou plusieurs hétéroatomes ;
- Q est un groupe hydrocarboné comportant de 2 à 18 inclus atomes de carbone et éventuellement un ou plusieurs hétéroatomes ;
- A est un groupe alkylidène comportant de 1 à 5 inclus atomes de carbone ;
- les $R_j$ sont semblables ou différents entre eux et peuvent être choisis parmi :

    *le groupe A-$PO_3H_2$, A ayant la signification précitée ;
    *un groupe alkyle comportant de 1 à 18 inclus atomes de carbone et pouvant porter des groupements [R-O($R_i$-O)$_n$], R et $R_i$ ayant les significations précitées ;
    *et le groupement :

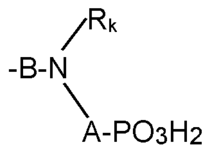

- $R_k$ désignant un groupement tel que $R_j$ ;
- B désignant un groupement alkylène comportant de 2 à 18 inclus atomes de carbone ;

- "n" est un nombre supérieur ou égal à 0 ;
- "r" est la somme des groupements [R-O($R_i$-O)$_n$] portés par l'ensemble des $R_j$ ;
- "q" est le nombre des groupements [R-O($R_i$-O)$_n$] portés par Q ;
- la somme "r+q" est comprise de 1 à 10 ;
- "y" est un nombre entier compris de 1 à 3 ;
- Q, N et les $R_j$ peuvent former ensemble un ou plusieurs cycles , ce ou ces cycles pouvant en outre contenir un ou plusieurs autres hétéroatomes.

**4.** Béton comprenant une composition hydraulique selon l'une des revendications 1 à 3 gâchée avec de l'eau.

**5.** Mélange fluidifiant pour liant hydraulique comprenant au moins un premier additif réducteur d'eau comprenant au moins un groupement amino-alkylène phosphonique et au moins un second additif réducteur d'eau comprenant au moins un polymère à structure peigne, un polycarboxylate de polyoxyde d'alkylène méthacrylique, la concentration

en poids d'extrait sec du second additif étant comprise de 30 % à 95 % de la concentration en poids d'extrait sec du premier additif.

**6.** Mélange fluidifiant selon la revendication 5, dans lequel la concentration en poids d'extrait sec du second additif est inférieure ou égale à 90 % de la concentration en poids d'extrait sec du premier additif.

**7.** Mélange fluidifiant selon l'une quelconque des revendications 5 à 6, dans lequel le premier additif répond à la formule :

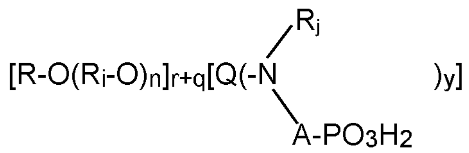

dans laquelle :

- R est un atome d'hydrogène ou un groupe hydrocarboné monovalent comportant de 1 à 18 inclus atomes de carbone et éventuellement un ou plusieurs hétéroatomes ;
- les $R_i$ sont semblables ou différents entre eux et représentent un alkylène comme l'éthylène, le propylène, l'amylène, l'octylène ou le cyclohexène ou un arylène comme le styrène ou le méthylstyrène, les $R_i$ renfermant éventuellement un ou plusieurs hétéroatomes ;
- Q est un groupe hydrocarboné comportant de 2 à 18 inclus atomes de carbone et éventuellement un ou plusieurs hétéroatomes ;
- A est un groupe alkylidène comportant de 1 à 5 inclus atomes de carbone ;
- les $R_j$ sont semblables ou différents entre eux et peuvent être choisis parmi :

    *le groupe $A\text{-}PO_3H_2$, A ayant la signification précitée ;
    *un groupe alkyle comportant de 1 à 18 inclus atomes de carbone et pouvant porter des groupements $[R\text{-}O(R_i\text{-}O)_n]$, R et $R_i$ ayant les significations précitées ;
    *et le groupement :

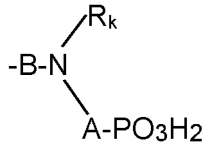

  - $R_k$ désignant un groupement tel que $R_j$ ;
  - B désignant un groupement alkylène comportant de 2 à 18 inclus atomes de carbone ;

- "n" est un nombre supérieur ou égal à 0 ;
- "r" est la somme des groupements $[R\text{-}O(R_i\text{-}O)_n]$ portés par l'ensemble des $R_j$ ;
- "q" est le nombre des groupements $[R\text{-}O(R_i\text{-}O)_n]$ portés par Q ;
- la somme "r+q" est comprise de 1 à 10 ;
- "y" est un nombre entier compris de 1 à 3 ;
- Q, N et les $R_j$ peuvent former ensemble un ou plusieurs cycles, ce ou ces cycles pouvant en outre contenir un ou plusieurs autres hétéroatomes.

**8.** Mélange fluidifiant selon l'une quelconque des revendications 5 à 6, dans lequel le premier additif répond à la formule :

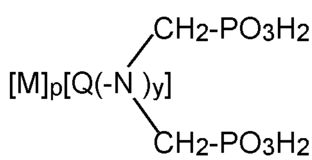

dans laquelle :

- M est un groupe hydrocarboné, linéaire ou ramifié comprenant éventuellement un ou plusieurs hétéroatomes ;
- Q est un groupe hydrocarboné comportant de 2 à 18 inclus atomes de carbone et éventuellement un ou plusieurs hétéroatomes ;
- "p" est le nombre des groupements [M] portés par Q, p étant compris de 1 à 10 ; et
- "y" est un nombre entier compris de 1 à 3.

## Patentansprüche

**1.** Hydraulische Zusammensetzung umfassend:

- mindestens ein hydraulisches Bindemittel;
- mindestens einen ersten Wasser reduzierenden Zusatzstoff umfassend mindestens eine Amino-Alkylen-Phosphon-Gruppe;
- mindestens einen zweiten Wasser reduzierenden Zusatzstoff umfassend mindestens ein Kammpolymer, ein Polycarboxylat von Methacryl-Alkylen-Polyoxid, wobei die Trockensubstanzkonzentration in Gew.-% des zweiten Zusatzstoffes im Bereich von 30 % bis 95 % der Trockensubstanzkonzentration in Gew.-% des ersten Zusatzstoffes beträgt.

**2.** Hydraulische Zusammensetzung nach Anspruch 1, wobei die Trockensubstanzkonzentration in Gew.-% des zweiten Zusatzstoffes kleiner oder gleich 90 % der Trockensubstanzkonzentration in Gew.-% des ersten Zusatzstoffes ist.

**3.** Hydraulische Zusammensetzung nach einem der vorstehenden Ansprüche, wobei der erste Zusatzstoff die Formel hat:

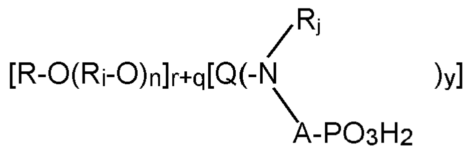

wobei:

- R ein Wasserstoffatom oder eine einwertige Kohlenwasserstoffgruppe ist, die 1 bis einschließlich 18 Kohlenstoffatome und gegebenenfalls ein oder mehrere Heteroatome enthält;
- die $R_i$ gleich oder voneinander verschieden sind und ein Alkylen wie Ethylen, Propylen, Amylen, Octylen oder Cyclohexen oder ein Arylen wie Styrol oder Methylstyrol darstellen, wobei die $R_i$ möglicherweise ein oder mehrere Heteroatome einschließen;
- Q eine Kohlenwasserstoffgruppe mit 2 bis einschließlich 18 Kohlenstoffatomen und möglicherweise einem oder mehreren Heteroatomen ist;
- A eine Alkylidengruppe mit 1 bis einschließlich 5 Kohlenstoffatomen ist;
- die $R_j$ gleich oder voneinander verschieden sind und ausgewählt werden können aus:

  * der Gruppe $A\text{-}PO_3H_2$, wobei A die obige Bedeutung hat;
  * einer Alkylgruppe, die 1 bis einschließlich 18 Kohlenstoffatome aufweist und Gruppen $[R\text{-}O(R_i\text{-}O)_n]$ tragen kann, wobei R und $R_i$ die obigen Bedeutungen haben;
  * und der Gruppe:

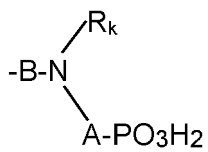

  - wobei $R_k$ eine Gruppe wie $R_j$ bezeichnet;
  - B eine Alkylengruppe bezeichnet, die 2 bis einschließlich 18 Kohlenstoffatome aufweist;

- "n" eine Zahl größer gleich Null ist;

- "r" die Summe der Gruppen [R-O($R_i$-O)$_n$] ist, die von allen $R_j$ getragen werden;
- "q" die Anzahl der Gruppen [R-O($R_i$-O)$_n$] ist, die von Q getragen werden;
- die Summe "r+q" zwischen 1 und 10 liegt;
- "y" eine ganze Zahl von 1 bis 3 ist;
- Q, N und die $R_j$ zusammen einen oder mehrere Ringe bilden, wobei dieser Ring oder diese Ringe außerdem ein oder mehrere weitere Heteroatome enthalten kann/können.

**4.** Beton mit einer hydraulischen Zusammensetzung nach einem der Ansprüche 1 bis 3, die mit Wasser gemischt ist.

**5.** Verflüssigende Mischung für hydraulisches Bindemittel, umfassend mindestens einen ersten Wasser reduzierenden Zusatzstoff mit mindestens einer Amino-Alkylen-Phosphon-Gruppe und mindestens einen zweiten Wasser reduzierenden Zusatzstoff umfassend mindestens ein Kammpolymer, ein Polycarboxylat von Methacryl-Alkylen-Polyoxid, wobei die Trockensubstanzkonzentration in Gew.-% des zweiten Zusatzstoffes im Bereich von 30 % bis 95 % der Trockensubstanzkonzentration in Gew.-% des ersten Zusatzstoffes beträgt.

**6.** Verflüssigende Mischung nach Anspruch 5, wobei die Trockensubstanzkonzentration in Gew.-% des zweiten Zusatzstoffes kleiner oder gleich 90 % der Trockensubstanzkonzentration in Gew.-% des ersten Zusatzstoffes ist.

**7.** Verflüssigende Mischung nach einem der Ansprüche 5 bis 6, wobei der erste Zusatzstoff die Formel hat:

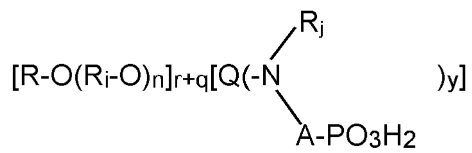

wobei:

- R ein Wasserstoffatom oder eine einwertige Kohlenwasserstoffgruppe ist, die 1 bis einschließlich 18 Kohlenstoffatome und gegebenenfalls ein oder mehrere Heteroatome enthält;
- die $R_i$ gleich oder voneinander verschieden sind und ein Alkylen wie Ethylen, Propylen, Amylen, Octylen oder Cyclohexen oder ein Arylen wie Styrol oder Methylstyrol darstellen, wobei die $R_i$ möglicherweise ein oder mehrere Heteroatome einschließen;
- Q eine Kohlenwasserstoffgruppe mit 2 bis einschließlich 18 Kohlenstoffatomen und möglicherweise einem oder mehreren Heteroatomen ist;
- A eine Alkylidengruppe mit 1 bis einschließlich 5 Kohlenstoffatomen ist;
- die $R_j$ gleich oder voneinander verschieden sind und ausgewählt werden können aus:

  * der Gruppe A-$PO_3H_2$, wobei A die obige Bedeutung hat;
  * einer Alkylgruppe, die 1 bis einschließlich 18 Kohlenstoffatome aufweist und Gruppen [R-O($R_i$-O)$_n$] tragen kann, wobei R und $R_i$ die obigen Bedeutungen haben;
  * und der Gruppe:

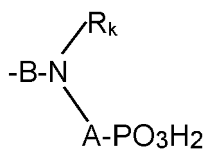

  - wobei $R_k$ eine Gruppe wie $R_j$ bezeichnet;
  - B eine Alkylengruppe bezeichnet, die 2 bis einschließlich 18 Kohlenstoffatome aufweist;

- "n" eine Zahl größer gleich Null ist;
- "r" die Summe der Gruppen [R-O($R_i$-O)$_n$] ist, die von allen Rj getragen werden;
- "q" die Anzahl der Gruppen [R-O($R_i$-O)$_n$] ist, die von Q getragen werden;
- die Summe "r+q" zwischen 1 und 10 liegt;
- "y" eine ganze Zahl von 1 bis 3 ist;
- Q, N und die $R_j$ zusammen einen oder mehrere Ringe bilden, wobei dieser Ring oder diese Ringe außerdem

ein oder mehrere weitere Heteroatome enthalten kann/können.

**8.** Verflüssigende Mischung nach einem der Ansprüche 5 bis 6, wobei der erste Zusatzstoff die Formel hat:

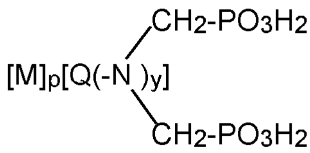

wobei:

- M eine lineare oder verzweigte Kohlenwasserstoffgruppe ist, die möglicherweise ein oder mehrere Heteroatome umfasst;
- Q eine Kohlenwasserstoffgruppe mit 2 bis einschließlich 18 Kohlenstoffatomen und möglicherweise einem oder mehreren Heteroatomen ist;
- "p" die Anzahl der Gruppen [M] ist, die von Q getragen werden, wobei p zwischen 1 und 10 liegt; und
- "y" eine ganze Zahl von 1 bis 3 ist.

## Claims

**1.** Hydraulic composition comprising:

- at least one hydraulic binder;
- at least one first water-reducing additive comprising at least one amino alkylene phosphonic group;
- at least one second water-reducing additive comprising at least one polymer with a comb structure, an alkylene methacrylic polyoxide polycarboxylate, the concentration by weight of dry extract of the second additive being from 30% to 95% of the concentration by weight of dry extract of the first additive.

**2.** Hydraulic composition according to claim 1 wherein the concentration by weight of dry extract of the second additive is less than or equal to 90% of the concentration by weight of dry extract of the first additive.

**3.** Hydraulic composition according to any one of the preceding claims, wherein the first additive has the formula:

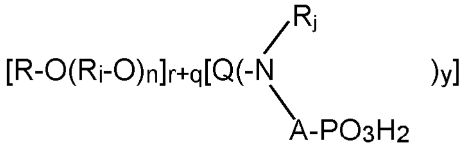

wherein:

- R is a hydrogen atom or a monovalent hydrocarbon group with 1 to 18 carbon atoms and optionally one or more heteroatoms;
- $R_i$ are similar to or different from each other and represent an alkylene such as ethylene, propylene, amylene, octylene or cyclohexene or an arylene such as styrene or methyl styrene, $R_i$ optionally containing one or more heteroatoms;
- Q is a hydrocarbon group with 2 to 18 carbon atoms and optionally one or more heteroatoms;
- A is an alkylidene group with 1 to 5 carbon atoms;
- $R_j$ are similar to or different from each other and may be chosen from:

  *the group $A\text{-}PO_3H_2$, A having the meaning above;
  *an alkyl group comprising 1 to 18 carbon atoms and able to have $[R\text{-}O(R_i\text{-}O)_n]$ groups, R and $R_i$ having the above meanings;
  *and the group:

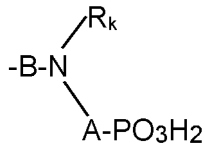

- $R_k$ designating a group such as $R_j$;
- B designating an alkylene group with 2 to 18 carbon atoms;

- "n" is a whole number greater than or equal to 0;
- "r" is the sum of the $[R\text{-}O(R_i\text{-}O)_n]$ groups borne by all the $R_j$;
- "q" is the number of the $[R\text{-}O(R_i\text{-}O)_n]$ groups borne by Q;
- the sum "r+q" is comprised from 1 to 10;
- "y" is a whole number from 1 to 3;
- Q, N and $R_j$ can form one or more rings together; this ring or these rings being able to also contain one or more heteroatoms.

**4.** Concrete comprising a hydraulic composition according to claims 1 to 3 mixed with water.

**5.** Fluidizing mixture for hydraulic binder comprising at least one first water-reducing additive comprising at least one amino alkylene phosphonic group and at least one second water-reducing additive comprising at least one polymer with a comb structure, a methacrylic alkylene polyoxide polycarboxylate, the concentration by weight of dry extract of the second additive being from 30% to 95% of the concentration by weight of dry extract of the first additive.

**6.** Fluidizing mixture according to claim 5, wherein the concentration by weight of dry extract of second additive is less than or equal to 90% of the concentration by weight of dry extract of the first additive.

**7.** Fluidizing mixture according to any one of claims 5 to 6, wherein the first additive has the formula:

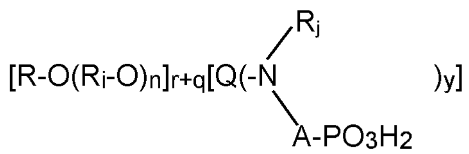

wherein:

- R is a hydrogen atom or a monovalent hydrocarbon group with 1 to 18 carbon atoms and optionally one or more heteroatoms;
- $R_i$ are similar to or different from each other and represent an alkylene such as ethylene, propylene, amylene, octylene or cyclohexene or an arylene such as styrene or methyl styrene, $R_i$ optionally containing one or more heteroatoms;
- Q is a hydrocarbon group with 2 to 18 carbon atoms and optionally one or more heteroatoms;
- A is an alkylidene group with 1 to 5 carbon atoms;
- $R_j$ are similar to or different from each other and may be chosen from:

  *the group $A\text{-}PO_3H_2$, A having the meaning above;
  *an alkyl group having 1 to 18 carbon atoms and able to have $[R\text{-}O(R_i\text{-}O)_n]$ groups, R and $R_i$ having the above meanings;
  *and the group:

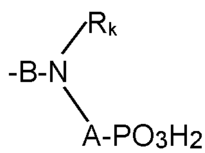

- $R_k$ designating a group such as $R_j$;

- B designating an alkylene group with 2 to 18 carbon atoms;

- "n" is a whole number greater than or equal to 0;
- "r" is the sum of the [R-O($R_i$-O)$_n$] borne by all the $R_j$ ;
- "q" is the number of the [R-O($R_i$-O)$_n$] borne by Q;
- the sum "r+q" is comprised from 1 to 10;
- "y" is a whole number from 1 to 3;
- Q, N and $R_j$ can form one or more rings together; this ring or these rings being able to also contain one or more heteroatoms.

**8.** Fluidizing mixture according to any one of claims 5 to 6, and wherein the first additive has the formula:

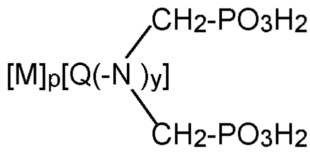

wherein:

- M is a linear or branched hydrocarbon group optionally comprising one or more heteroatoms;
- Q is a hydrocarbon group with 2 to 18 carbon atoms and optionally one or more heteroatoms;
- "p" is the number of groups [M] borne by Q, p being comprised between 1 and 10; and
- "y" is a whole number from 1 to 3.

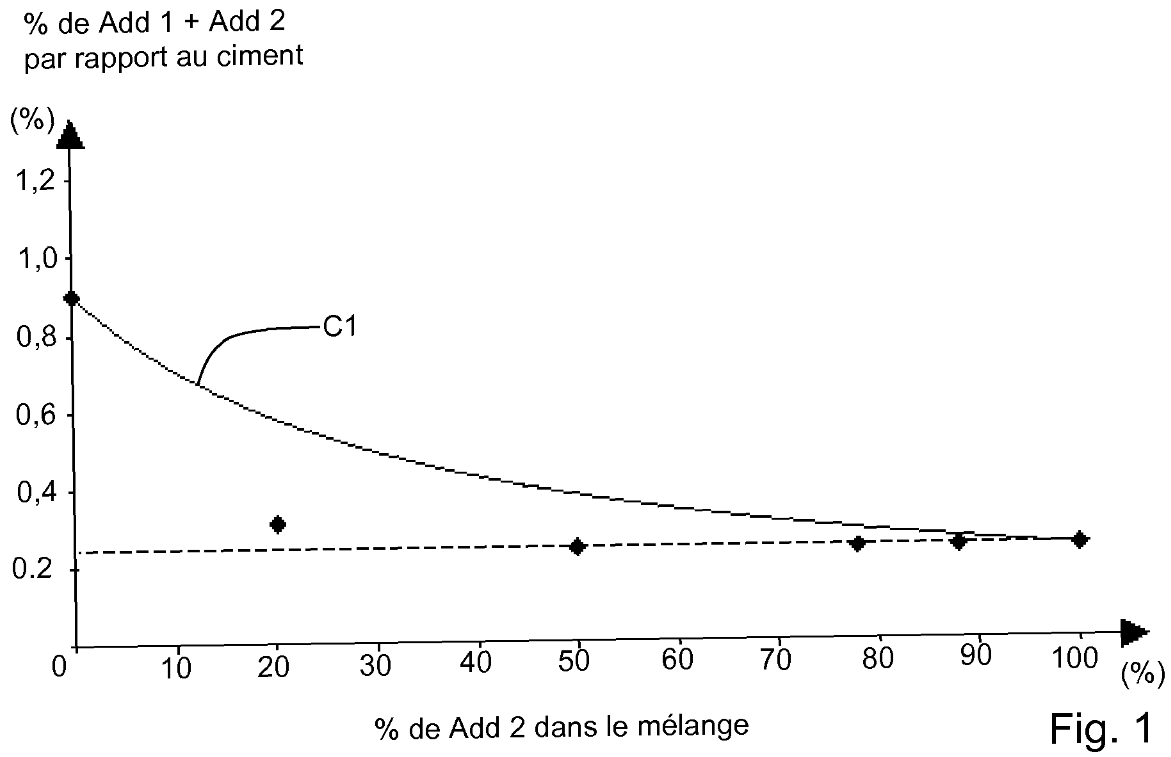
% de Add 1 + Add 2
par rapport au ciment
(%)
1,2
1,0
0,8
0,6
0,4
0.2
0
C1
10
20
30
40
50
60
70
80
90
100
(%)
% de Add 2 dans le mélange

Fig. 1

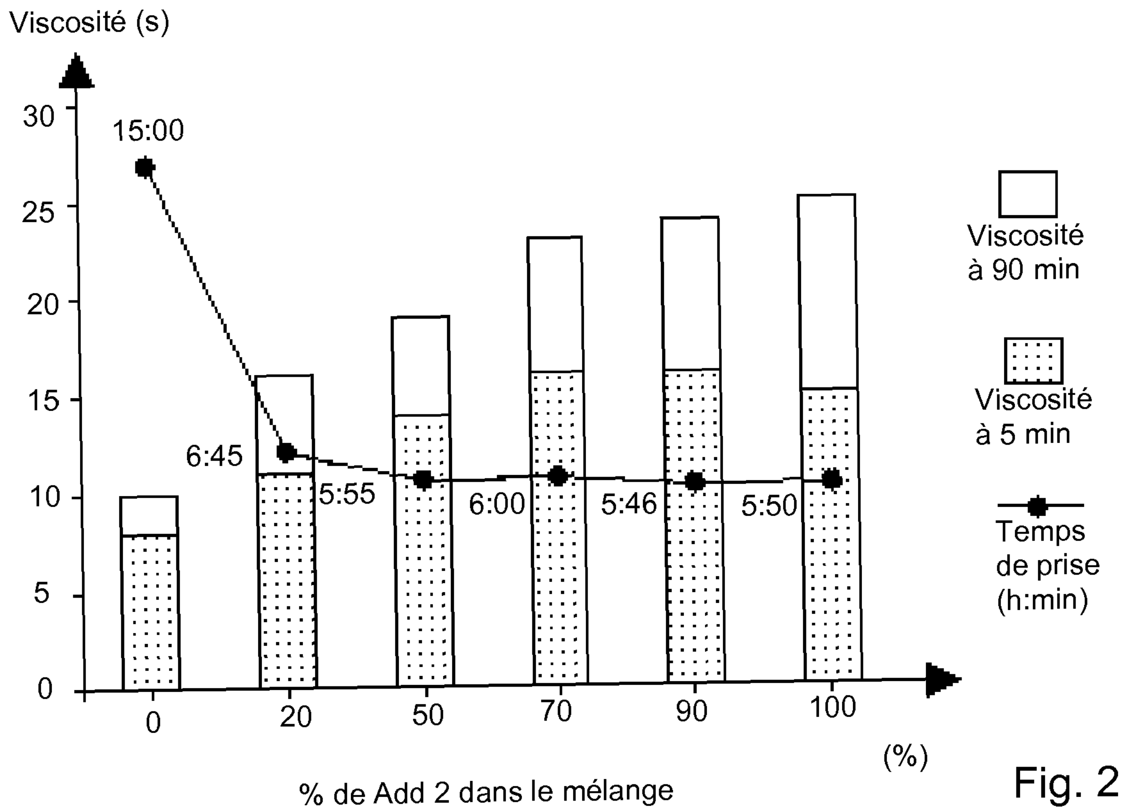
Viscosité (s)
30
25
20
15
10
5
0
15:00
6:45
5:55
6:00
5:46
5:50
0
20
50
70
90
100
(%)
% de Add 2 dans le mélange
Viscosité
à 90 min
Viscosité
à 5 min
Temps
de prise
(h:min)

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0663892 A
- FR 2776285